# EUROPÄISCHE PATENTANMELDUNG

(11) **EP 0 539 834 A1**
(43) Veröffentlichungstag der Anmeldung: **05.05.1993**
(21) Anmeldenummer: 92117867.9
(22) Anmeldetag: 19.10.1992
(51) Int. Cl.: B01J 8/02, B01J 8/04, B01D 53/04, B01D 53/36

(54) **Verfahren und Vorrichtung zur Strömungsführung in Radialstromreaktoren**

(30) Priorität: 23.10.1991 DE 4135018
(71) Anmelder: OTTO OEKO-TECH GMBH & CO. KG, D-50968 Köln (DE)
(72) Erfinder: Golde, Ernst, W-4150 Krefeld (DE); Lippek, Helmut, W-5303 Bornheim-Sechtem (DE); Mathews, Waldemar, Dr., W-5010 Bergheim (DE); Reschke, Günter, Dr., W-5000 Köln 40 (DE); Schilling, Günter, W-5000 Köln 1 (DE)
(74) Vertreter: Fitzner, Ulrich, Dr.

(57) **Zusammenfassung**

Die vorliegende Erfindung betrifft eine Vorrichtung zur Strömungsführung in Radialstromreaktoren zur Kontaktierung einer fluiden Phase mit Feststoff, wobei a) ein oder mehrere zylinderförmig oder als Vieleck ausgebildete Radialstromreaktoren nacheinander geschaltet sind, b) in den Radialstromreaktoren ein oder mehrere Festbetten parallel oder in einem Winkel zum äußeren Mantel des Radialstromreaktors und zueinander angeordnet sind, c) die Festbetten Ein- und Ausströmräume längs der Strömungsrichtung der Fluide seitlich begrenzen, d) das Volumen der Einströmräume mindestens dem der Ausströmräume entspricht und e) in den Festbetten ggf. in axialer Festbettrichtung Wärmetauscherrohre vorhanden sind.

## Beschreibung

Die Erfindung betrifft ein Verfahren und eine Vorrichtung zur Strömungsführung in Radialstromreaktoren zur Kontaktierung einer fluiden Phase mit Feststoff und findet Anwendung auf den Gebieten der Reaktions- und Adsorptionstechnik sowie der Umweltschutztechnik, beispielsweise zur Reinigung von Abluftgasen und PKW-Auspuffgasen.

Bekannt sind Verfahren und Vorrichtungen, die eine gleichmäßige Anströmung der Katalysator- oder Adsorbens-Festbetten nur unter Zuhilfenahme zusätzlicher Einbauelemente ermöglichen(DD-PS 113 263,DD-PS 133 582, DD-PS 133 705, DD-PS 70 071, DE-OS 2 614 692, DE-PS 3 334 775).

Die GB-PS 1 481 017 beschreibt eine Vorrichtung, die aus vielen ineinandergeschachtelten zylindrischen Schüttungen mit gleichen radialen Abständen besteht und zur Rückgewinnung von Edelmetallen dient. Diese Vorrichtung ermöglicht keine Vergleichsmäßigung der fluiden Phase über die Festbettlänge.

Bekannt ist eine Vorrichtung, bei der der Gesamtstrom in viele Einzelströme durch die Schüttung unterteilt wird, die sich aus halbkreisförmigen Reaktorbetten zusammensetzt. Die halbkreisförmigen Reaktorbetten sind abwechselnd an den Enden verbunden und ziehen sich zum Mittelpunkt des Reaktors hin. Eine Vergleichmäßigung über die Höhe des Reaktors wird nicht erreicht.

In der US-PS 4 883 646 wird zur besseren Ausnutzung der Schüttung ein Festbett mit einem Radialstrombett kombiniert. Diese Vorrichtung ermöglicht keine Verringerung der Reaktorhöhe.

Die bekannten Vorrichtungen und Verfahren ermöglichen eine Vergleichmäßigung der durch das Festbett strömenden fluiden Phase nur durch hohe Material- und Energiekosten, die sich durch Zusatzeinrichtungen, herbeigeführte Zwangsstromführung der fluiden Phase, Druckverlusten und daraus resultierenden Einsatz größerer Kompressoren ergeben.

Aufgabe der Erfindung ist es, eine Vorrichtung für ein Verfahren zur Strömungsführung in Radialstromreaktoren zur Kontaktierung einer Fluiden Phase mit Feststoff zur Verfügung zu stellen, das unter Senkung von Druckverlusten bei gleichzeitiger Erhöhung des Wikrungsgrades eine gleichmäßige Anströmung der fluiden Phase über die gesamte Schüttlänge durch Verwendung einer kostengünstigen Vorrichtung mit einer gegenüber dem bisher üblichen Stand der Technik verringerten Reaktorlänge ermöglicht.

Diese Aufgabe wird dadurch gelöst, daß a) in den Radialstromreraktoren ein oder mehrere Festbetten parallel oder in einem Winkel zum äußeren Mantel des Radialstromreaktors und zueinander angeordnet sind und jedes Festbett einen unabhängig vom Gesamt-Radialstromreaktor arbeitenden Radialstromreaktor bildet und die einzelnen Festbetten gegeneinander nicht durch Trennwände abgegrenzt sind, b) ein oder mehrere zylinderförmig oder als Vieleck ausgebildete Radialstromreaktoren nacheinander geschaltet sind, c) die Festbetten die Ein- und Ausströmräume längs der Strömungsrichtung der Fluide seitlich begrenzen, d) das Volumen der Ausströmräume größer als das der Einströmräume ist und e) in den Festbetten ggfs. in axialer Festbettrichtung Wärmetauscherrohre vorhanden sind.

Erfindungsgemäß ist es möglich, daß die Vorrichtung aus einen oder mehreren übereinander angeordneten Radialstromreaktoren besteht, die ein inneres und äußeres Teilfestbett bilden, so daß ein enger Einströmraum und zwei große Ausströmräume, die größer als das doppelte des Einströmraumes sind, entstehen. Mindestens sollten jedoch die Volumina der Ein- und Ausströmräume gleich sein. Die Teilfestbetten sind parallel oder in einem Winkel zueinander so angeordnet, daß die Einströmräume im Längsschnitt rechteckig sind oder die Form eines Spitzkeiles bilden. Der Gesamtstrom der fluiden Phase wird bei Eintritt in den Einströmraum des Festbettes in zwei Teilströme geteilt, die das Festbett radial nach innen und radial nach außen durchströmen. Die beiden Teilströme werden einzeln oder als Gesamtstrom abgeführt.

Erfindungsgemäß sind das innere und äußere Teilfestbett vorzugsweise zylindrisch oder als Vieleck ausgebildet. Es ist aber ebenfalls möglich, daß der Einströmraum im Längsschnitt rechteckig ist oder die Form eines Spitzkeiles bildet.Ferner kann der Radialstromreaktor in Längsrichtung durch Trennwände in Teilreaktoren unterteilt sein, so daß jeder Teilreaktor als selbständiger Reaktor arbeiten kann.

In einer Variante der erfindungsgemäßen Vorrichtung ist von den drei Teilreaktoren mittels Ventilschaltung einer auf Adsorption, ein zweiter auf Desorption und ein dritter auf Kühlung derart einstellbar, daß bei feststehendem Reaktor ein Drehadsorber simuliert wird.

In einer weiteren Variante der erfindungsgemäßen Vorrichtung werden zwei vorzugsweise parallel nebeneinander stehenden Radialstromreaktoren über eine Brennkammer miteinander verbunden. In den Reaktoren ist ein als Zylindermantel oder als Vieleck ausgebildeter Festbetteil untergebracht, dessen Mantelfläche parallel mit Abstand zu der äußeren Mantelfläche des Radialstromreaktors angeordnet ist. Das Festbett bildet somit den äußeren Mantel eines Zentralrohres. Dieses Rohr bildet das Einströmrohr. Durch ein weiteres quer zur Strömungsrichtung des in dem Einströmrohr fließenden Fluids angeordnetes Festbett ist das Einströmrohr einseitig verschlossen. Die Brennkammer ist so angelegt, daß die durch das quer zur Strömungsrichtung angeordnete Festbett verschlossene Seite des Einströmrohrs an diese angrenzt. Über die quer zur Strömungsrichtung angeordneten Festbetten und die Brennkammer sind somit beide Einströmrohre miteinander verbunden.

Die Festbetten können erfindungsgemäß aus Adsorbenzien bestehen, mittels derer sich aus den strömenden Fluiden Bestandteile entfernen lassen. Als Adsorbens kommen hierbei alle handelsüblichen Molekularsiebpackungen in Betracht. Sehr gut läßt sich beispielsweise Natriumaluminiumsilikat verwenden. Ebenso ist es möglich, daß das Adsorbens aus hydrophobierten Molekularsieben besteht. Weitere einsetzbare Materialien sind Aktivkohle, Aluminiumoxid oder Silicagel.

In einer anderen Variante der Erfindung können die Festbetten aus einer Schüttung katalytischen Materials, insbesondere nichtmetallischen Oxiden bestehen. Bevorzugt wird hierbei eine katalytische Schüttung aus Eisenoxid-Pel- lets.Derartige Festbetten werden insbesondere verwendet bei Ver- fahren mit katalytischer Nachverbrennung. Hierbei werden die Fluidströme zunächst über das Katalysatorbett geleitet. Den Fest- betten ist in Strömungsrichtung eine Brennkammer nachgeordnet, in welcher die z.B.in einem verunreinigten Gas vorhandenen Schad stoffe verbrannt werden. Die Schüttung aus katalytischem Material dient dabei gleichzeitig zur Wärmespeicherung, so daß die Wärme durch periodischen Wechsel der Strömungsrichtung regenerativ zu- rückgewonnen und in der Schüttung hin- und hergeschoben wird.

Die Voraussetzung für eine gleichmäßige Anströmung über die Reaktorlänge in einem Radialstromreaktor wie
- Verringerung der Reaktorlänge
- enger Einströmraum für die fluide Phase
- großer Ausströmraum nach der Schüttung,
die bei den bekannten Radialstromreaktoren nicht gleichzeitig verwirklicht werden können, werden durch die erfindungsgemäße Lösung bei Erhöhung der Effektivität realisiert.

Die erfindungsgemäße Vorrichtung weist Effekte auf, die nach dem Stand der Technik nicht bekannt waren und für nicht möglich gehalten wurden. Denn die beschriebenen Anordnungen der Festbetten in den Reaktoren führen zu einer außerordentlichen Vergleichmäßigung des durch das Festbett strömenden Fluids. Bisher konnte dies nämlich nur durch hohen Material- und Energieaufwand und Zuhilfenahme von zusätzlichen Einrichtungen, z.B. durch Einbau von Trennwänden zwischen den Festbetten erreicht werden. Die Verluste und damit insbesondere der Einsatz von großen, kostenintensiven Kompressoren können somit erfindungsgemäß verhindert werden.

Die Erfindung soll nachfolgend anhand der Zeichnungen näher erläutert werden. Die Figuren zeigen:
- Figuren 1a-d:: Strömungsformen bei Einsatz von Radialstromreaktoren.
- Figuren 2a,b:: Die erfindungsgemäße Lösung mit zwei Radialstromreaktoren.
- Figur 3:: Katalytische Nachverbrennung unter Verwendung eines Radialstromreaktors mit in einem Winkel zueinander angeordneten Teilfestbetten.
- Figur 4:: Reinigung eines großen Abluftstromes mit drei Radialstromreaktoren.
- Figuren 5a-e:: Die erfindungsgemäße Lösung mit zwei Radialstromreaktoren und mit katalytischer Nachverbrennung.
- Figuren 6a-d:: Doppelringströmer mit Dreiteilung.
- Figur 7:: Einfachringströmer mit Dreiteilung.
- Figur 8:: Simulation eines Drehadsorbers.
- Figur 9:: Vorrichtung mit Festbett quer zur Strömungsrichtung .

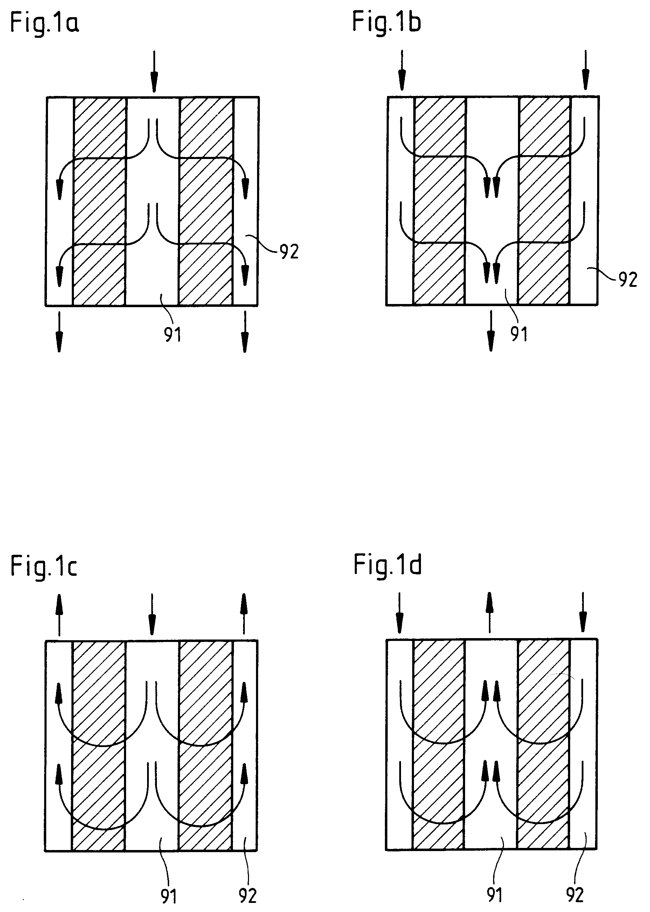

Prinziell kommen erfindungsgemäß die in den Figuren 1a - d dargestellten Strömungsformen in Betracht. Dabei stellen die Varianten gemäß den Figuren 1a und b z-förmige Strömungsformen dar. Deren Kennzeichen ist, daß die Ströme in dem Zentralrohr 91 und dem äußeren Ringraum 92 dieselbe Richtung haben. Dagegen verlaufen die Fluidströme in den Figuren 1 c und d in entgegengesetzter Richtung.

Die Figuren 1 b und d haben gemeinsam, daß die Strömung vom äußeren Ringraum 92 zum Zentralrohr 91 verläuft, während dies in den Figuren 1 a und c umgekehrt ist.

Die gleichmäßigere Gasverteilung ist bei der Auslegung der Reaktoren gemäß den Figuren 1 c und d gewährleistet. In der Praxis lassen sich jedoch die in den Figuren 1 a und b dargestellten Verhältnisse leichter realisieren.

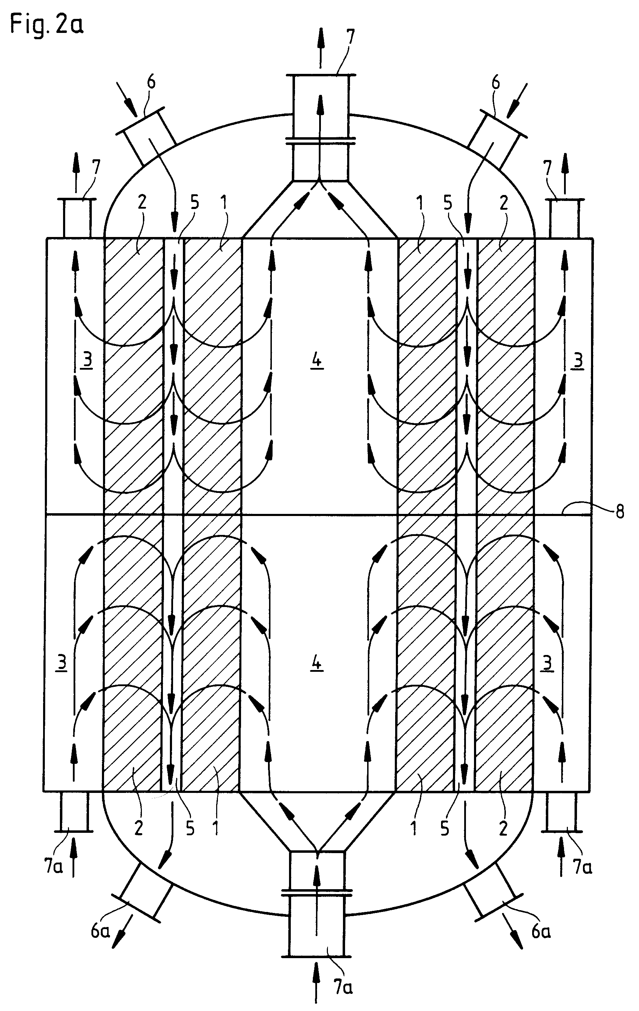

Nach Figur 2a besteht die Vorrichtung aus zwei Radialstromreaktoren, die durch einen Kolonnenboden 8 getrennt und übereinander in einem Apparat angeordnet sind. Das innere und äußere Teilfestbett 1 und 2 sind parallel zueinander angeordnet.

Das Beispiel zeigt die Anwendung der erfindungsgemäßen Lösung zur Reinigung eines Abluftstromes, der Lösemittel enthält, durch ein kontinuierliches Adsorptionsverfahren, indem abwechselnd der obere und der untere Radialstromreaktor in der Adsorptions- oder Desorptionsphase arbeitet. In der Adsorptionsphase gelangt der Abluftstrom durch den Gaseintritt 6 in den engen Einströmraum 5. Der gesamte Abluftstrom wird in zwei Teilströme geteilt, die das aus einem Adsorbens bestehende innere und äußere Teilfestbett 1 und 2 radial nach innen und radial nach außen gleichmäßig über die Reaktorlänge durchströmen, dabei gereinigt werden und über den Gasaustritt 7 abgeführt werden.

In der Desorptionsphase wird Heißdampf durch Saugen aus Gasaustritt 6a, durch den Gaseintritt 7a und die Teilfestbetten 1 und 2 geleitet und damit das vorher adsorbierte Lösungsmittel desorbiert und mit dem Heißdampf abtransportiert.

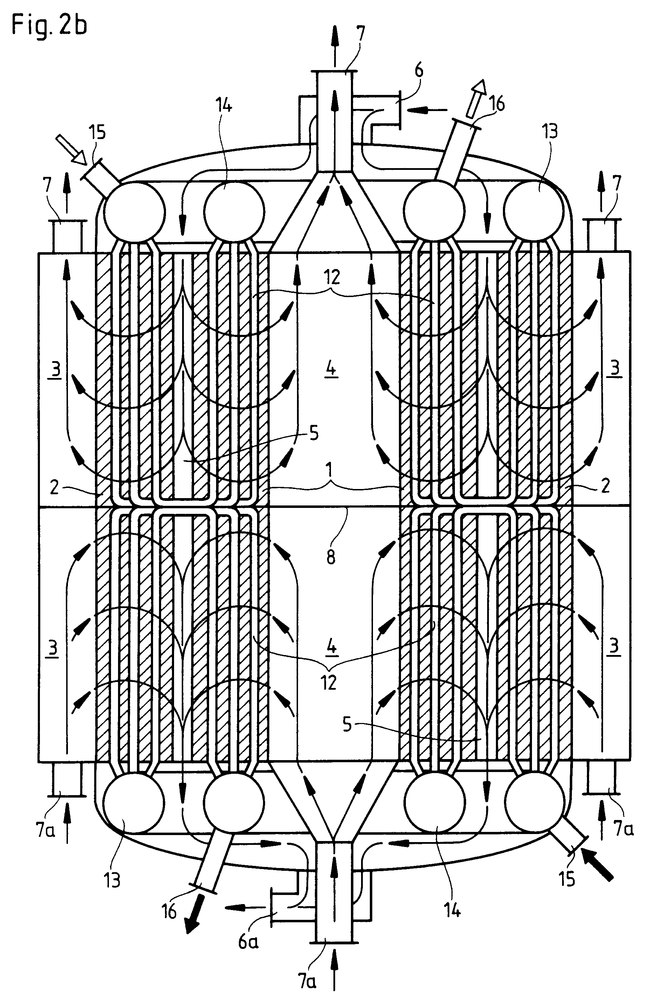

Nach Figur 2b wird wie in Figur 2a verfahren, nur daß die Teilfestbetten 1 und 2 Wärmetauscherrohre 12, die in Sammelbehältern 13 und 14 eingebunden sind, enthalten, durch die Kaltluft während der Adsorptionsphase oder Heißdampf während der Desorptionsphase strömt.

Das Kühl- bzw. Heizmedium gelangt durch den Eintritt 15 und über den Sammelbehälter 13 in die Wärmetauscherrohre 12 und verläßt diese über den Sammelbehälter 14 und den Austritt 16. Die Adsorptionsphase läuft wie in Figur 2a ab. In der Desorptionsphase werden durch den Heißdampf, der durch die Wärmetauscherrohre 12 strömt, die Festbetten 1 und 2 aufgeheizt und die adsorbierten Lösungsmittel wieder desorbiert. Über Gasein- und Gasaustritt 6a und 7a wird saubere Umgebungsluft durch die Teilfestbetten 1 und 2 gesaugt und damit die desorbierten Lösungsmittel abtransportiert.

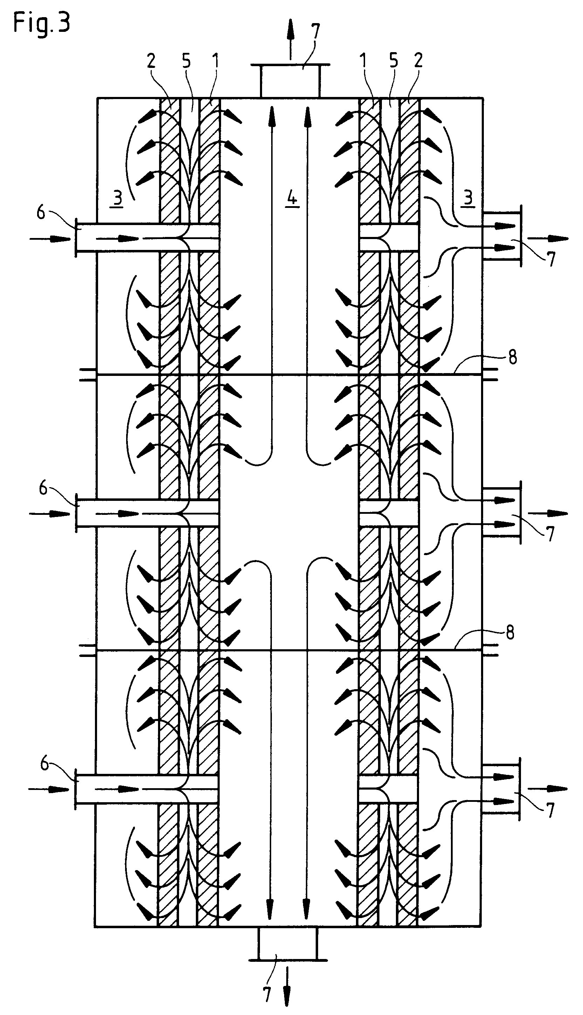

Nach Figur 3 soll ein großer Abluftstrom von 200 000 m 3 /h gereinigt werden. Die Vorrichtung besteht aus drei übereinander angeordneten und durch Kolonnenböden 8 getrennte Radialstromreaktoren. Die Teilfestbetten 1 und 2 sind parallel zueinander angeordnet.

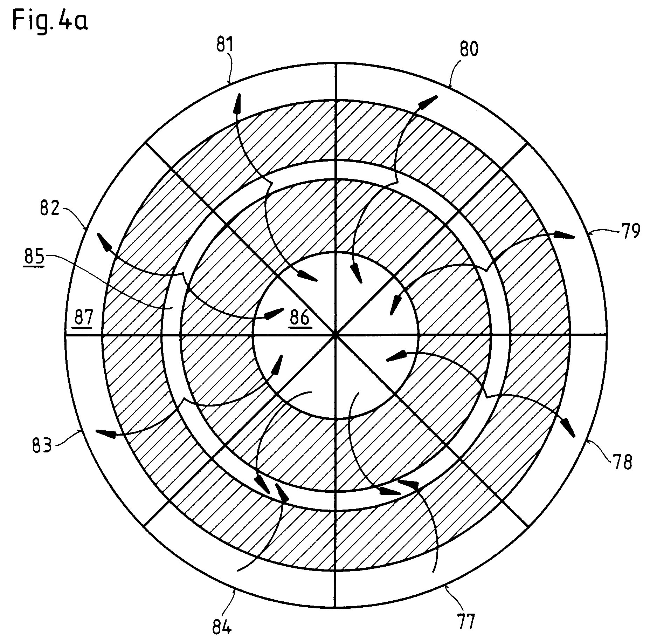

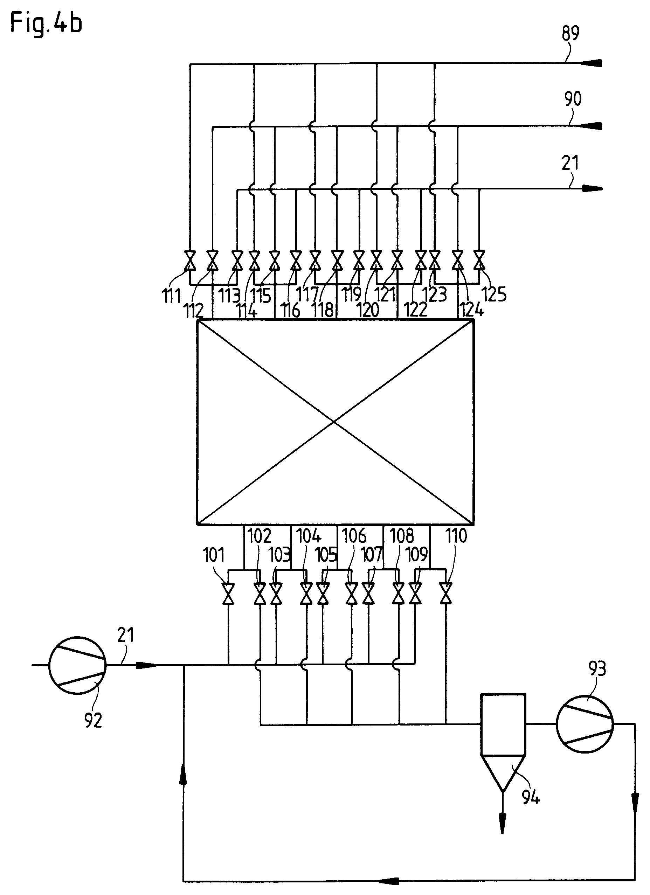

In den Figuren 4a und b ist schließlich eine kontinuierliche Ad- und Desorption mit feststehendem Radialstromadsorber durch Simulation eines Drehadsorbers mittels Ventilumschaltungen beschrieben. Hierbei wird beispielsweise davon ausgegangen, daß die Teilabschnitte 78 und 83 zeitlich versetzt der Adsorption unterworfen sind. Das Rohgas wird hierbei in den Einströmraum 85 gepreßt und verläßt den Reaktor radial zu den inneren und äußeren Zwischenräumen 86 und 87.

Während in den Abschnitten 78 bis 83 die Adsorption stattfindet, wird in dem Teilabschnitt 77 desorbiert. Hierbei strömt der Desorptionsluftstrom im Gegenstrom zur Adsorptionsrichtung durch die Schüttung, d.h. aus dem inneren und äußeren Zwischenraum 86 und 87 in den Zwischenspalt 85.

Während dieses Prozesses wird gleichzeitig der Teilabschnitt 84 gekühlt.

Wenn die Desorption im Abschnitt 77 beendet ist, erfolgt die Umschaltung. d.h., die Desorptionsstufe wird durch Umschalten der Ventile auf Kühlung entsprechend dem Teilabschnitt 84 geschaltet. Gleichzeitig beginnt in dem gekühlten Teilabschnitt84 die Adsorption, wobei durch Umschaltung der Ventile auf Adsorption gemäß den Pfeilrichtungen in den Abschnitten 78 und 83 geschaltet wird.

Der Vorteil dieser Anlage ist, daß der gesamte Adsorber feststeht. Das Umschalten von Adsorption auf Desorption oder Kühlung erfolgt allein durch die Umschaltung der entsprechenden Ventile.

Figur 4b zeigt die Ventilschaltung für einen in fünf Abschnitte unterteilten Adsorber für die Lösemittelrückgewinnung. Die Ventile 101, 103, 105 sowie 113, 116 und 119 sind geöffnet, so daß das Rohgas 21 in drei Teilabschnitten des Reaktors der Adsorptionsphase unterworfen ist und als Reingas 91 den Adsorber 85 verläßt. Dabei sind die Ventile 102, 104, 106 und 111, 112, 114, 115, 117, 118 geschlossen.

Die Reaktorabschnitte an den Ventilen 107, 108, 109 und 110 werden dabei gekühlt bzw. desorbiert. Dazu sind die Ventile 107, 109, 121, 122, 123 und 125 geschlossen und 108, 110, 120 und 124 geöffnet. Der Ventilator 93 saugt über 120, 108 Kühlluft 89 durch den Teilreaktor, der sich in der Kühlphase befindet, und Heißluft 90 über 124, 110 durch den Teilreaktor, der sich in der Desorptionsphase befindet. Die Kühlluft mischt sich nach Verlassen des Adsorbers mit der lösemittelbeladenen heißen Luft und der Mischstrom gelangt in den Kühlabscheider 94, wo das Lösemittel auskondensiert. Nach erfolgter Desorption werden die Ventile umgeschaltet und die Desorptions- und Kühlungsphase rücken um einen Teilreaktor weiter. Das zurückgewonnene Lösungsmittel fällt kontinuierlich im Kühlabscheider 94 an.

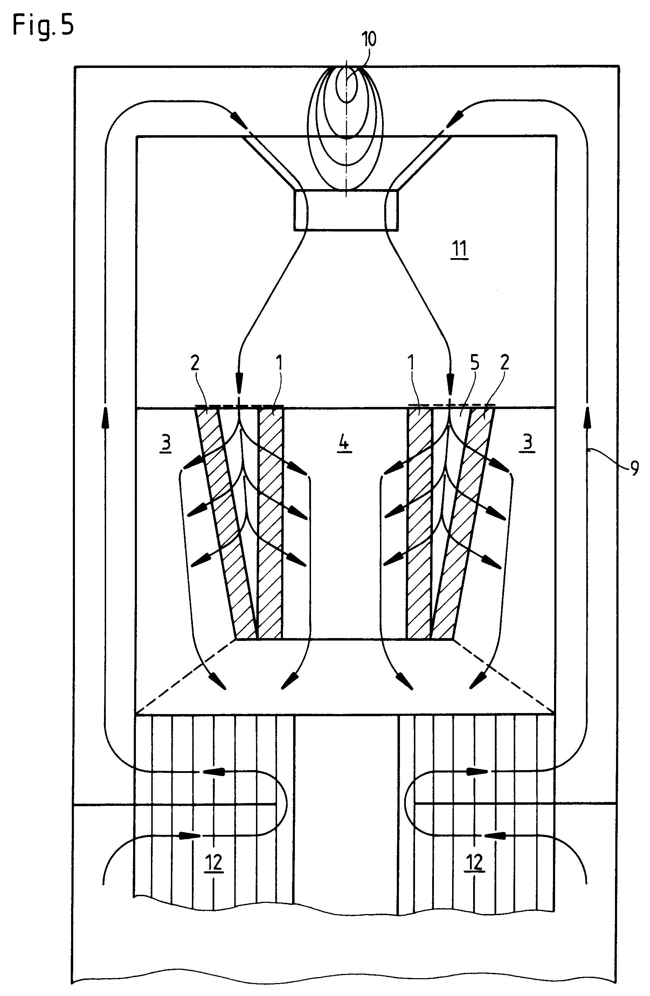

Nach Figur 5 wird die erfinderische Lösung für die katalytische Nachverbrennung verwendet. Ein Abluftstrom 9 wird durch den Brenner 10 auf die Eintrittemperatur von 400 o C erwärmt und gelangt über den Mischungsraum 11 in den Einströmraum 5, teilt sich in zwei Teilströme, strömt durch das äußere und innere Teilfestbett 1 und 2 in die Ausströmräume 3 und 4, vereint sich wieder zu einem Gesamtstrom und wird durch Wärmetauscherrohre 12 im Gegenstrom zum kalten Abluftstrom geführt. Die Teilfestbetten 1 und 2 sind in einem Winkel von 10 o zueinander angeordnet.

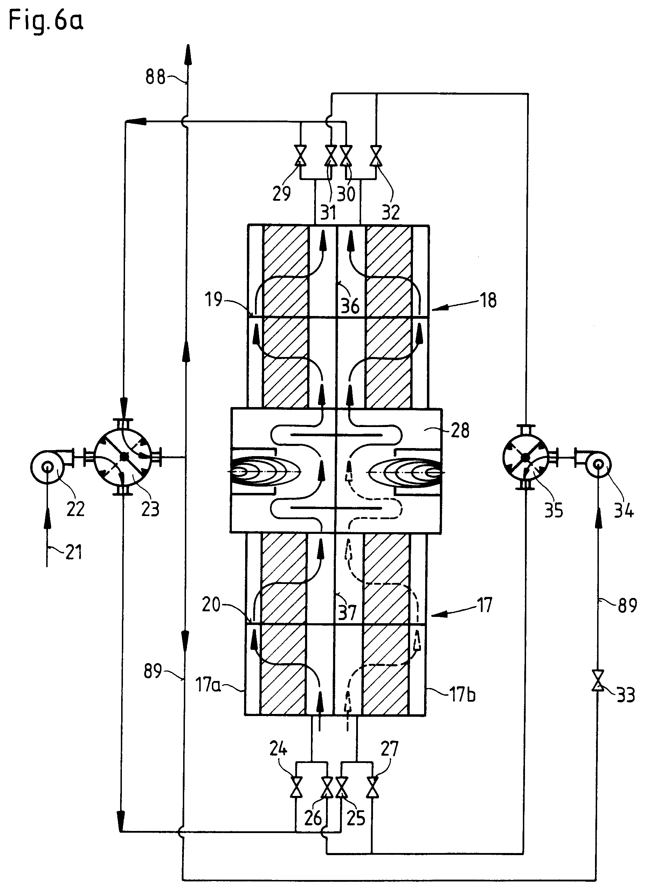

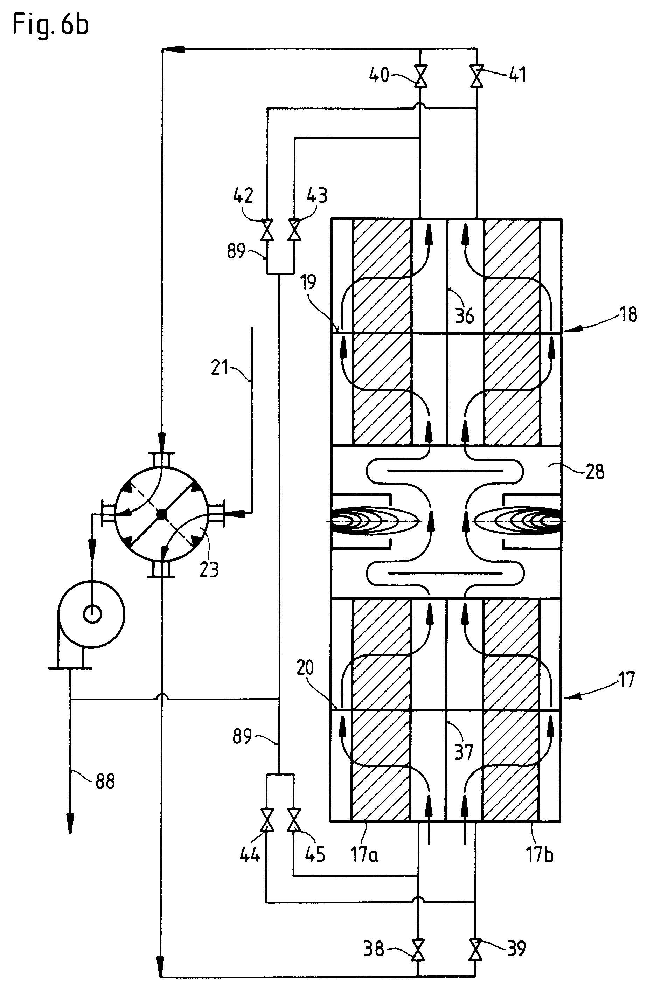

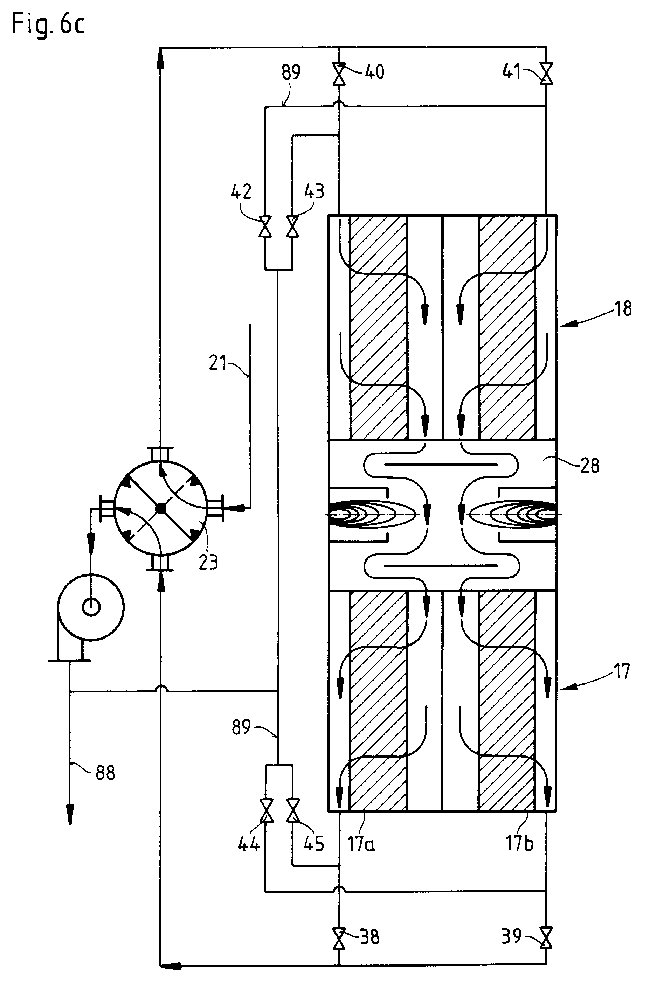

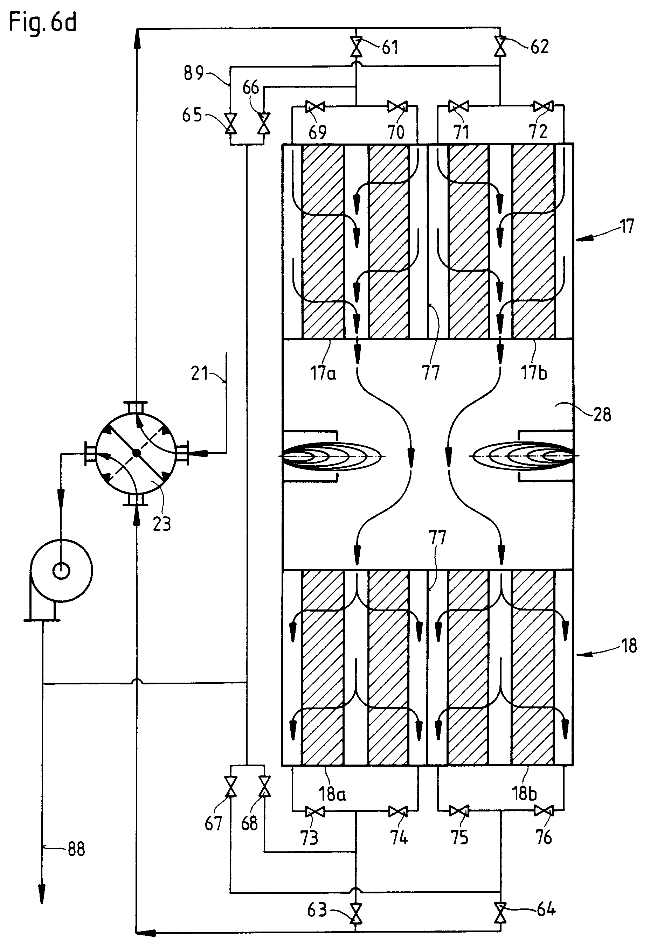

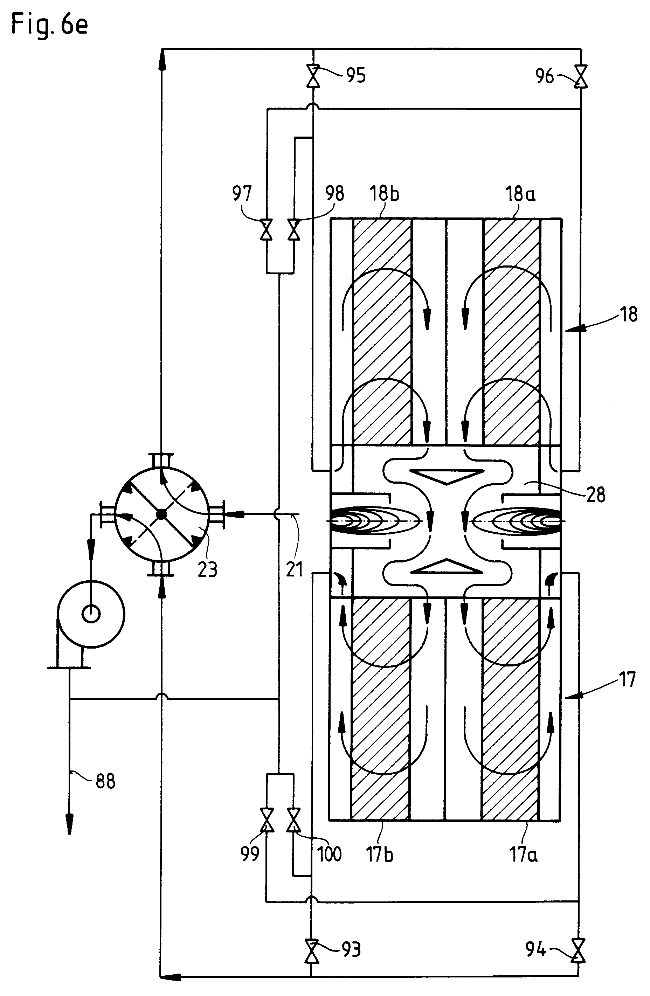

In den Figuren 6 bis 8 sind weitere Beispiele des erfindungsgemäßen Reaktors mit katalytischer Nachverbrennung dargestellt. Hierbei werden für die Schüttung schwach katalytische Eisenoxid-Pellets vorzugsweise verwendet.

In den Figuren 6a-e sind die beiden Radialstromreaktoren 17 und 18 in Strömungsrichtung nacheinander angeordnet. Zwischen den Reaktoren befindet sich die Brennkammer 28. Die Reaktoren 17 und 18 werden außerdem durch die vertikalen Trennwände 19 und 20 in zwei Hälften geteilt. Die dargestellte Anlage ist jedoch nicht auf zwei Reaktoren begrenzt. Sie kann vielmehr modulartig auf eine größere Anzahl von Reaktoren vergrößert werden.

Die Anlage in dem Beispiel gemäß Figur 6a wird angefahren, indem der Reaktor 17 zunächst auf ca. 700 o C erhitzt wird. Die Temperatur des Reaktors 18 liegt hingegen bei etwa 50-100 o C. Der Rohgasstrom 21 wird über den Lüfter 22 angesaugt und gelangt über die Umschaltklappe 23 in den Reaktor 17. Hierbei sind die Ventile 24 und 25 geöffnet und die Ventile 26 und 27 geschlossen. Der Rohgasstrom wird durch die auf 700 o C erhitzte Schüttung im Reaktor 17 aufgeheizt. Durch die Abgabe der Wärme an den Rohgasstrom kühlt sich das Festbett ab. Gleichzeitig erfolgt in dem Festbett die katalytische Umsetzung der Schadstoffe.

In der Brennkammer 28 wird das Rohgas auf die endgültige Reak tionstemperatur gebracht. Hierbei werden die Schadstoffe fast vollständig verbrannt. Die heiße gereinigte Luft gelangt anschließend in den Reaktor 18 und gibt hier ihre Wärme an die kältere Schüttung ab. Dazu werden die Ventile 29 und 30 geöffnet und die Ventile 31 und 32 geschlossen.

Bevor die Wärmefront im Reaktor 18 durchbricht, wird das Ventil 25 geschlossen und das Ventil 27 geöffnet. Die Folge hiervon ist, daß das Rohgas für kurze Zeit (ca. 30 Sek.) nur durch die Hälfte 17a des Reaktors 17 strömt, während die Hälfte 17b mit gereinigter Luft gespült wird. Hierzu wird das Ventil 33 geöffnet und über den Lüfter 34 und die Umschaltklappe 35 ein kleiner Teilstrom der gereinigten Luft in den Reaktorteil 17b gepreßt. Hierdurch wird das restliche Rohgas aus der Hälfte 17b des Reaktors 17 in die Brennkammer 28 gespült. Am Ende des Spülvorganges ist die Hälfte 17b des Reaktors 17 mit Reinluft gefüllt.

Nach Abschluß dieses Teilschrittes erfolgt die Umschaltung der Klappe 23 und das Rohgas gelangt über die Ventile 29 und 30 in den jetzt auf 700 o C erhitzten Reaktor 18. Gleichzeitig mit der Umschaltung der Klappe 23 werden die Ventile 24 und 27 geschlossen und die Ventile 26 und 25 geöffnet. Das Rohgas gelangt nunmehr von oben in die Brennkammer 18 und erhitzt als gereinigte Reinluft den Teil 17b des Reaktors 17. Gleichzeitig wird über den Lüfter 34, die Klappe 35 und das Ventil 26 die linke Seite 17a des Reaktors 17 vom Rohgas freigespült (ca. 30 Sek.).

Nach Beendigung der Spülung des Teils 17a des Reaktors 17 werden die Ventile 33 und 26 geschlossen und das Ventil 24 geöffnet. Die heiße Reinluft strömt nun durch beide Teile des Reaktors 17.Hierbei sind die Ventile 24 und 25 geöffnet während die Ventile 26 und 27 geschlossen sind. Kurz bevor die Wärmefront im Reaktor 17 durchbricht, wird der Spülvorgang am Reaktor 18 unter Umschaltung der Klappe 35 eingeleitet. Bemerkenswert ist hierbei, daß die Spülzeit wesentlich geringer ist, als die Umschaltzeit, z.B.Umschaltzeit T u = 10 Min., Spülzeit T sp = 30 Sek.. Die Spülmenge ist ebenfalls geringer als die Rohgasmenge und wird immer der Brennkammer zugeführt.

Der Vorteil des erfindungsgemäßen Verfahrens und der erfindungsgemäßen Vorrichtung ist darin zu sehen, daß die bei der Nachverbrennung nach dem Stand der Technik auftretenden Temperaturen von ca. 800-1000 o C auf etwa 600 o C durch die Anwendung der schwach katalytischen Pellets abgesenkt werden. Im Idealfall bei Schadstoffkonzentration größer als 1g/m 3 wird der Brenner nur beim Anfahren benötigt. Die Wärmefront wird im folgenden im Apparat hin und her geschoben und verläßt die Schüttung nicht. Hierbei werden die Ventile 24 - 27,29 - 32 und 33 sowie die Umschaltklappen 23 und 35 nur durch relativ kalte Luft beaufschlagt. D.h., die Beanspruchung dieser beweglichen Teile ist relativ gering, so daß auch der Verschleiß niedrig gehalten werden kann.

Die Reaktoren nach den Figuren 6b bis c unterscheiden sich gemeinsam von dem in Figur 6a dargestellten Reaktor dadurch, daß die Umschaltklappe 35 und der Spüllüfter 34 entfallen.

Der in Figur 6b wiedergegebene Reaktor stellt eine Variante des zuvor beschriebenen Reaktors gemäß Figur 6a dar. Auch hierbei sind die Reaktoren durch die Trennwände 36 und 37 in zwei etwa gleich große Hälften aufgeteilt. Der heiße Reaktor 17 wird bei geöffneten Ventilen 38 und 39 mit Rohgas beaufschlagt. Das kalte Rohgas kühlt die Festbettschüttung ab, während das Rohgas seinerseits sich aufheizt. Nach dem Passieren der Brennkammer 28 bei geöffneten Ventilen 40 und 41 durchströmt die saubere heiße Luft die kalte Festbettschüttung des Reaktors 18 und gibt an diese ihre Wärme ab.

Kurz vor dem Umschalten der Strömungsrichtung erfolgt wieder die Spülung des Teils 17b des Reaktors 17. Hierfür bleibt das Ventil 38 weiter geöffnet, während das Ventil 39 geschlossen wird. Das Ventil 44 wird geöffnet, so daß saubere Spülluft durch den Teil 17b des Reaktors 17 strömt. Hierbei sind die Ventile 45, 42 und 43 geschlossen, während die Ventile 40 und 41 geöffnet sind.

Zur Umkehr der Strömungsrichtung wird die Umschaltklappe 23 betätigt, so daß das Rohgas von oben nach unten in den Reaktor 18 fließt. Durch Öffnen des Ventils 39 und Schließen des Ventils 38 wird gleichzeitig erreicht, daß die gesamte Luft über die Seite 17b des Reaktors 17 strömt. Durch Schließen des Ventils 44 und Öffnen des Ventils 45 läßt sich die Spülung der Hälfte 17a des Reaktors 17 erreichen.

Der in Figur 6c dargestellte Reaktor ist eine Variante des Reaktors gemäß Figur 6b. Der Unterschied besteht lediglich darin, daß die Reaktoren 17 und 18 nicht durch eine vertikale Wand unterteilt sind.

In Figur 6d ist die regenerative Nachverbrennung unter Verwendung von zwei Ringstromadsorbern mit Rohgaszuführung in den beiden Ausströmräumen dargestellt. Die Radialstromreaktoren 17 und 18 werden durch die Trennwand 77 in zwei gleich große Teilreaktoren 17a und 17b bzw. 18a und 18b unterteilt.
Entsprechend den obigen Schilderungen wird auch hier gearbeitet. D.h., bei heißer Schüttung des Reaktors 17 sind die Ventile 61, 62 sowie 69-72 geöffnet, während die Ventile 65 und 66 geschlossen sind.

Umgekehrt ist bei kalter Schüttung des Reaktors 18 die Schaltung wie folgt: Die Ventile 63 und 64 sowie 73-76 sind geöffnet, während die Ventile 67 und 68 geschlossen sind.

Durch die wiedergegebenen Schaltungen wird erreicht, daß kaltes Rohgas zunächst durch die heiße Schüttung des Reaktors 17 strömt und hierbei Wärme an das Rohgas abgegeben wird. Demzufolge kühlt sich die Schüttung ab. Nach Durchströmen der Brennkammer 28 strömt heiße Luft in die kalte Schüttung des Reaktors 18. Die Luft kühlt sich ab, während die Schüttung sich aufheizt, da die heiße Luft Wärme an diese abgibt.

Entsprechend den obigen Schilderungen erfolgt auch die Spülung. Beispielsweise wird die Hälfte 17b des Reaktors 17 dadurch gespült, daß die Ventile 65, 61 sowie 69-72 geöffnet werden, während die Ventile 62 und 66 geschlossen sind. Das gesamte Rohgas wird während der Spülzeit dadurch über die Hälfte 17a des Reaktors 17 geführt. Die Hälfte 17b des Reaktors 17 wird gleichzeitig mit sauberer Reinluft beaufschlagt, d.h., das Restrohgas wird durch die Reinluft in die Brennkammer 28 gespült.

Vor dem Durchbruch der Temperaturfront im Reaktor 18 wird die Umschaltklappe 23 umgestellt, so daß das Rohgas 21 in den Reaktor 18 gelangt.

Zur Spülung der Hälfte 17a des Reaktors 17 werden die Ventile 62, 66 und 69-72 geöffnet. Gleichzeitig werden die Ventile 61 und 65 geschlossen. Hierdurch wird erreicht, daß die gesamte Reinluft über die Hälfte 17b des Reaktors 17 geführt wird, während die Hälfte 17a sich in Spülstellung befindet.

In Figur 6e ist schließlich eine Variante dargestellt, bei der das Gas im äußeren Ringraum entgegengesetzt zur Strömungsrichtung im Zentralrohr strömt.

Durch den Reaktor 18 mit heißer Schüttung wird das kalte Rohgas gesaugt. Die Ventile 95, 96 sind geöffnet und 97, 98 geschlossen. Da das kalte Rohgas am Außenmantel des Apparates (einschließlich Brennkammer) strömt, kann hier weitgehend auf besondere Isoliermaßnahmen verzichtet werden.

Der Reaktor 17 ist zugleich im kalten Zustand. Die Ventile 93 und 94 sind geöffnet. Die aus der Brennkammer 28 kommende heiße, gesäuberte Luft strömt durch die kalte Schüttung des Reaktors 17 und erhitzt diesen.

Um die Reste an Rohgas aus dem Reaktor 18 zu entfernen, werden die Ventile 95 sowie 97 geöffnet und 96 sowie 98 bleiben geschlossen. Durch diese Maßnahme wird erreicht, daß die Seite 18a des Reaktors mit sauberer Spülluft beaufschlagt wird. Zur Spülung des Reaktorteils 18b werden die Ventile 96 sowie 98 geöffnet und 95 sowie 97 geschlossen.

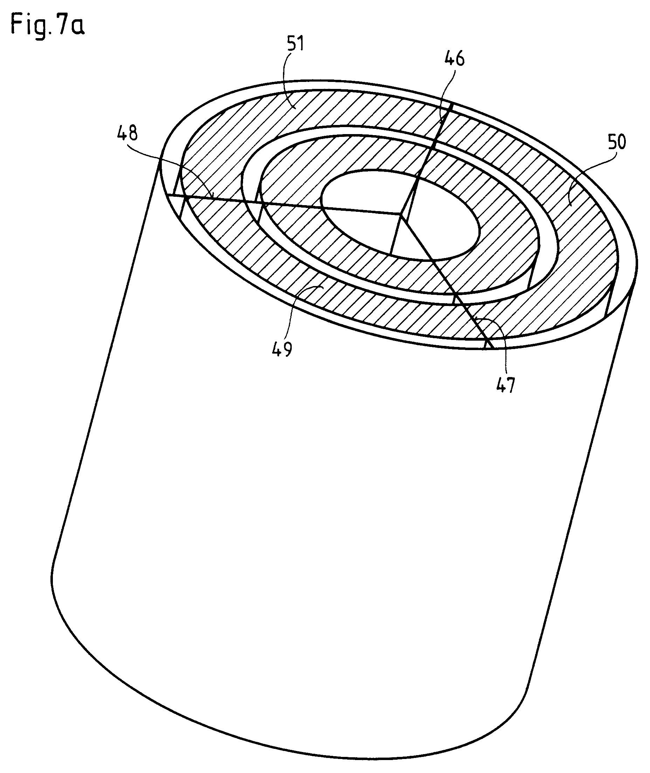

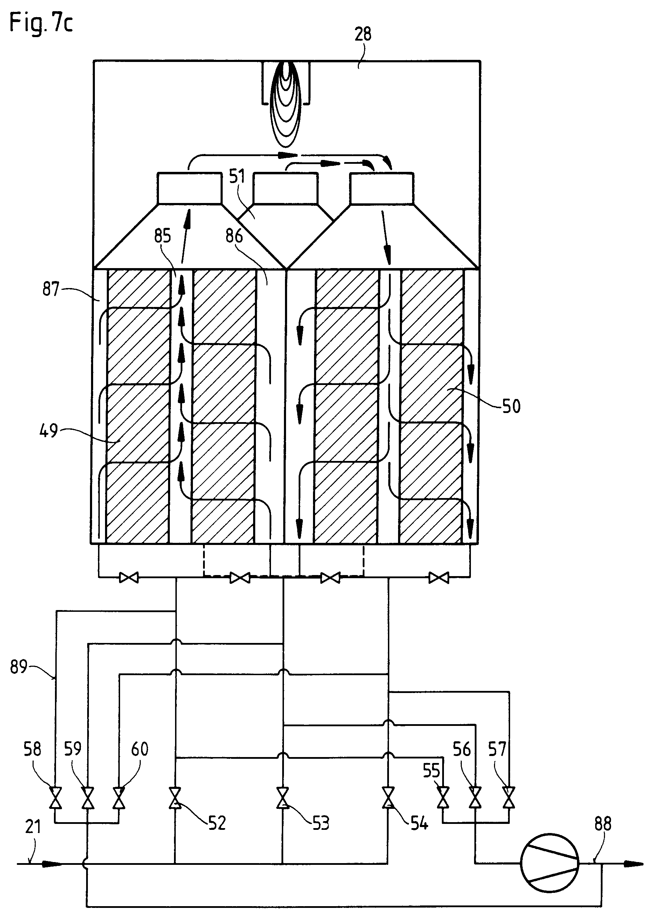

Der Reaktor gemäß den Figuren 7a-c zeigt ein Beispiel, bei welchem der Reaktor durch die vertikalen Trennwände 46, 47, 48 in drei gleiche Einzelreaktoren unterteilt ist. Ebenso wie bei den zuvor geschilderten Reaktoren wird mit einer heißen und kalten Schüttung gearbeitet. Beispielsweise kann das zufließende Rohgas durch das Festbett des Reaktorteils 49 aufgeheizt werden. Über die Brennkammer 28 strömt die gereinigte Abluft in das Festbett des Reaktors 50 und gibt dort an das Festbett die Wärme ab. Während dieses Vorgangs wird im Reaktor 51 mit sauberer Luft das Restrohgas herausgespült. Der Vorteil dieser Anlage liegt darin, daß nur eine Pumpe nötig ist. Durch entsprechende Schaltung der Ventile 52-60 wird je eines der Segmente 49,50,51 der Heizung, Kühlung oder Spülung unterworfen. D.h., das Verfahren läßt sich kontinuierlich bei gleichzeitiger Durchführung aller drei Vorgänge in einem Reaktor durchführen.

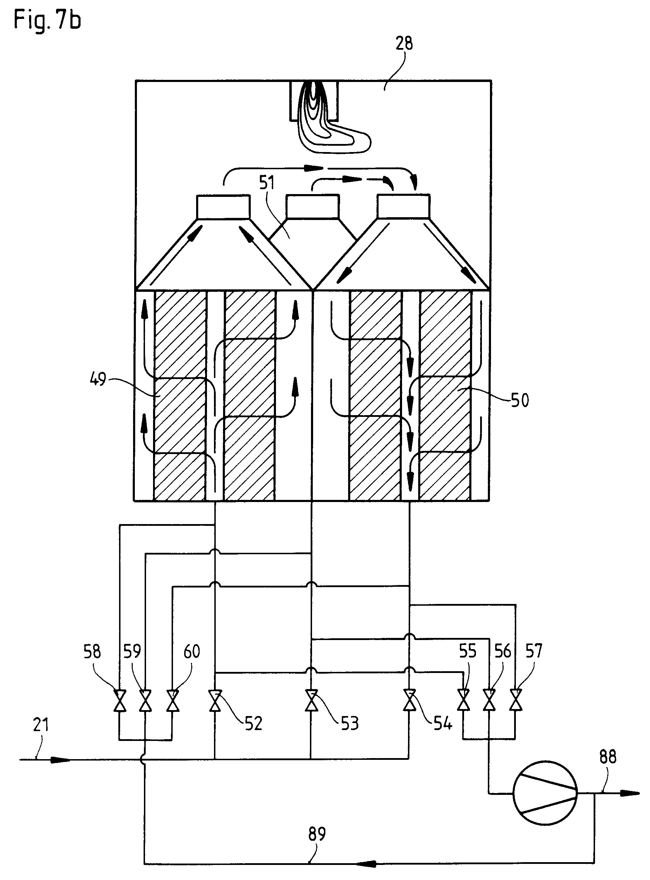

Die Figur 7d zeigt in der Seitenansicht eine Variante des Verfahrens und der Anlage gemäß Figuren 7a und b. Auch hier wird jedoch mit Teilsegmenten gearbeitet, wobei nebeneinander Erhitzung, Kühlung und Spülvorgang in den drei Teilabschnitten ablaufen. Der Unterschied zu 7b besteht darin, daß das kalte Rohgas über die Ventile 52, 61 und 62 durch die Außenräume 86 und 87 in den Ringspalt 85 des Teilreaktors 49 gesaugt wird. Dabei gibt die heiße Schüttung Wärme an das kalte Rohgas ab. Über die Brennkammer 28 gelangt das nun saubere Gas zum Ringspalt 85 des Teilreaktors 50 und gibt die Wärme an die dort kalte Schüttung ab.

Der Vorteil bei dieser Variante besteht darin, daß die Teilströme, die in die Räume 86 und 87 gesaugt werden, genau einstellbar sind, außerdem befindet sich das heiße Gas immer im inneren Ringspalt 85, d.h. innerhalb der Schüttung, und an den Außenwänden strömt stets kaltes Gas, so daß auf besondere Isoliermaßnahmen verzichtet werden kann.

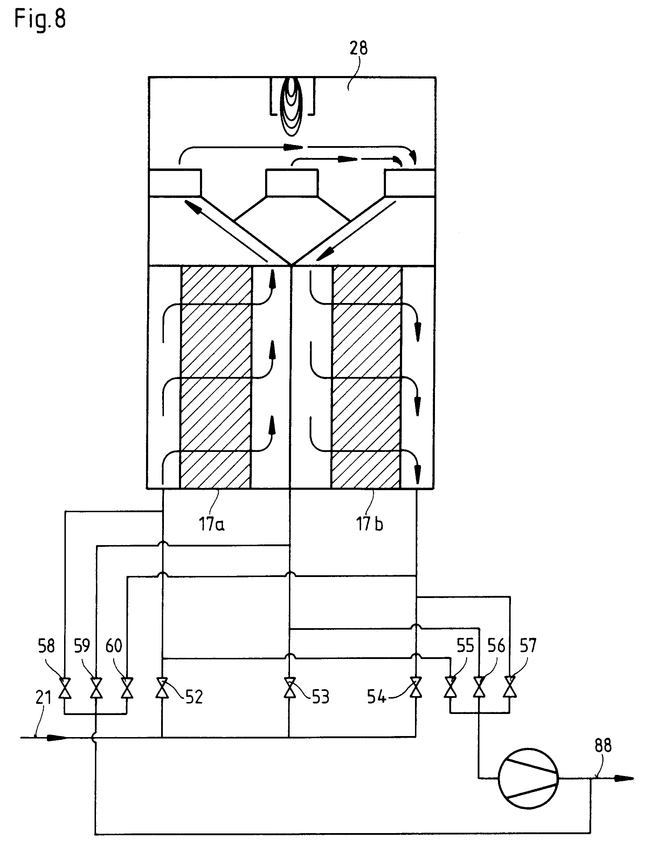

Figur 8 unterscheidet sich von Figur 7 nur dadurch, daß nicht mit einem Doppelringströmer, sondern nur mit einem Einfachringströmer gearbeitet wird. D.h., die Reaktorhälften 17b und 17a enthalten nur einen Festbettring. Das heiße Gas befindet sich hier stets im Inneren des Apparates.

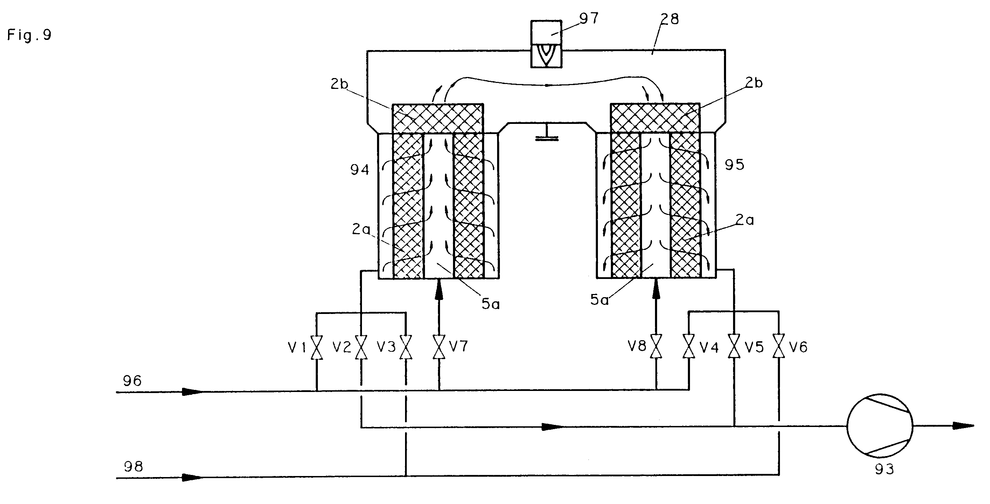

Figur 9 ist schließlich die Variante des erfindungsgemäßen Verfahrens mit nur zwei Radialstromreaktoren beschrieben. Diese zeichnen sich dadurch aus, daß durch die parallel und mit Abstand zur Reaktorwand angeordneten Festbetten 2a ein Einströmraum 5a in Form eines Zentralrohres gebildet wird. Quer zur Strömungsrichtung in dem Zentralrohr 5a sind die Festbetten 2b am Kopfende der Reaktoren angeordnet.

Festbetten 2b und die Brennkammer 28 sind somit die Zentralrohre 1a miteinander verbunden.

Die mit organischen Schadstoffen belastete Abluft 96 wird durch den Ventilator 93 in die Anlage gesaugt und strömt über die als Ringströmer ausgebildeten Reaktoren 94 und 95. Am Kopf der Ringströmer sind die Festbetten 2b angebracht, die als zusätzlicher Wärmespeicher dienen oder auch kleine, hochwirksame Katalysatorpackungen enthalten können.

Die Schüttung im Festbett 2a des Reaktors 94 ist heiß und die kalte Abluft 96 wird bis auf Reaktionstemperatur (450-650 ⁰ C) aufgeheizt. Bei dieser Temperatur erfolgt die katalytische Oxidation der Schadstoffe an den Festbettpartikeln.

Durch die Verbrennung in der Brennkammer 28 mittels des Brenners 97 kommt es zu einem weiteren Temperaturanstieg. Die heiße und gereinigte Luft strömt über die Brennkammer 28 in den Reaktor 95 über dessen Festbett 2b. Hier gibt die erhitzte Luft ihre Wärme an die kalte Schüttung 2a und 2b wieder ab. Dieser Aufbau der Anlage und diese Art der Strömungsführung hat überraschend zur Folge, daß bei Schadstoffkonzentration von weniger als 1 g pro m³ ohne zusätzliche Brennerenergie gearbeitet werden kann. Der Gasbrenner 97 wird somit nur für das Anfahren der Anlage benötigt.

Vor dem Durchbruch der Temperaturfront im Reaktor 95 wird der Ringströmer des Reaktors 94 mit der Frischluft 98 durchspült. Dazu wird die Abluft durch das Zentralrohr 5a des Reaktors 94 geführt, für kurze Zeit an den beiden Festbetten der Reaktoren 94 und 95 aufgewärmt und an der jetzt heißen Innenschicht des Reaktors 95 gereinigt. Zugleich strömt die Frischluft über das Ventil V3 in den Reaktor 94.

Nach der Spülung des Reaktors 94 erfolgt die Umschaltung der Strömungsrichtung. Die kalte Abluft strömt in den heißen Reaktor 95. Das verunreinigte Totraumvolumen im Zentralrohr des Reaktors 94 wird zugleich an der noch heißen Innenfläche des Reaktors 94 gereinigt, so daß keine Konzentrationspitzen in der Reinluft auftreten.

Durch den periodischen Wechsel der Strömungsrichtung nach einer bestimmten Umschaltzeit wird eine nahezu konstante Temperaturverteilung in der Vorrichtung erreicht. Steigt die Konzentration während des Betriebs stark an, wird Frischluft in entsprechender Menge durch Öffnung der Ventile V6 und V3 zugemischt. Außerdem ist an der Brennkammer ein Abzug vorhanden, über den heiße saubere Luft zur Energiegewinnung abgezweigt werden kann.

Durch die erfindungsgemäße Gestaltung der Reaktoren ist es möglich, die regenerative thermische Nachverbrennung im Gegensatz zu der herkömmlichen Verfahrensweise mit nur zwei Reaktoren zu betreiben. In allen nach dem Stand der Technik bekannten Apparaten wird mindestens ein dritter Reaktor für die Spülung zur Vermeidung von Konzentrationsspitzen in der Reinluft benötigt. Durch die Gestaltung der Reaktoren als Ringströmer wird die Wärme erfindungsgemäß im Zentralraum gehalten. Der Ringraum wird stets nur mit kalter Luft beaufschlagt. Dies führt dazu, daß der äußere Ringraum gleichzeitig als Isolierschicht wirkt.

## Patentansprüche

1. Vorrichtung zur Strömungsführung in Radialstromreaktoren zur Kontaktierung einer fluiden Phase mit Feststoff,
**dadurch gekennzeichnet**, daß
a) in den Radialstromreaktoren ein oder mehrere Festbetten parallel oder in einem Winkel zum äußeren Mantel des Radialstromreaktors und zueinander angeordnet sind und jedes Festbett seinerseits einen vom Gesamt-Radialstromreaktor unabhängig arbeitenden Radialstromreaktor bildet und die einzelnen Festbetten gegeneinander nicht durch Trennwände abgegrenzt sind,
b) ein oder mehrere zylinderförmig oder als Vieleck ausgebildete Radialstromreaktoren nacheinander geschaltet sind,
c) die Festbetten die Ein- (5) und Ausströmräume (3,4) längs der Strömungsrichtung der Fluide seitlich begrenzen,
d) das Volumen der Ausströmräume (3,4) größer als das der Ein-Auströmräume (5) ist und
e) in den Festbetten (1,2) ggf. in axialer Festbettrichtung Wärmetauscherrohre (12) vorhanden sind.

2. Vorrichtung nach Anspruch 1,
**dadurch gekennzeichnet**, daß das Festbett (1,2) aus einem inneren (1) und einem äußeren (2) Teilfestbett besteht.

3. Vorrichtung nach Anspruch 1 oder 2,
**dadurch gekennzeichnet**, daß das Volumen des Ausströmraums (3,4) doppelt so groß wie das des Einströmraums (5) ist.

4. Vorrichtung nach Anspruch 1,
**dadurch gekennzeichnet**, daß das innere und äußere Teilfestbett (1,2) zylindrisch oder als Vieleck ausgebildet sind.

5. Vorrichtung nach Anspruch 1,
**dadurch gekennzeichnet**, daß der Einströmraum (5) im Längsschnitt rechteckig ist oder die Form eines Spitzkeiles bildet.

6. Vorrichtung nach Anspruch 1,
**dadurch gekennzeichnet**, daß der Radialstromreaktor in Längsrichtung durch Trennwände (36,37) in Teilreaktoren unterteilt wird, so daß jeder Teilreaktor als selbständiger Reaktor arbeiten kann.

7. Vorrichtung nach einem der Ansprüche 1 bis 6,
**dadurch gekennzeichnet**, daß die Festbetten aus Adsorbenzien bestehen.

8. Vorrichtung nach Anspruch 7,
**dadurch gekennzeichnet**, daß das Adsorbens eine übliche Molekularsiebpackung ist.

9. Vorrichtung nach Anspruch 8,
**dadurch gekennzeichnet**, daß die Molekularsiebpackung aus Natriumaluminiumsilikat besteht.

10. Vorrichtung nach Anspruch 9,
**dadurch gekennzeichnet**, daß das Adsorbens aus hydrophobierten Molekularsieben besteht.

11. Vorrichtung nach Anspruch 7,
**dadurch gekennzeichnet**, daß das Adsorbens aus Aktivkohle, Aluminiumoxid , Silicagel und/oder Adsorberharzen besteht.

12. Vorrichtung nach einem der Ansprüche 1 und 6 bis 11,
**dadurch gekennzeichnet**, daß von den drei Teilreaktoren mittels Ventilschaltung einer auf Adsorption, ein zweiter auf Desorption und ein dritter auf Kühlung derart einstellbar ist, daß bei feststehendem Reaktor ein Drehadsorber simuliert wird.

13. Vorrichtung nach einem der Ansprüche 1 bis 6,
**dadurch gekennzeichnet**, daß die Festbetten aus einer Schüttung katalytischen Materials bestehen.

14. Vorrichtung nach Anspruch 13,
**dadurch gekennzeichnet**, **daß** die katalytische Schüttung Füllkörper bestehend aus Oxiden unedler Metalle enthält.

15. Vorrichtung nach Anspruch 13,
**dadurch gekennzeichnet**, daß die katalytische Schüttung aus Eisenoxid-Pellets besteht.

16. Vorrichtung nach einem der Ansprüche 13 oder 15 ,
**dadurch gekennzeichnet**, daß den Festbetten in Strömungsrichtung eine Brennkammer nachgeordnet ist.

17. Vorrichtung nach einem der Ansprüche 13 bis 16,
**dadurch gekennzeichnet**, daß die Schüttung aus katalytischem Material gleichzeitig als regenerativer Wärmespeicher dient.

18. Vorrichtung nach Anspruch 1,
**dadurch gekennzeichnet**, daß
a) sie aus zwei Radialstromreaktoren besteht, in denen ein den Einströmraum bildendes Zentralrohr (5a) durch das Festbett (2a) umschlossen wird,
b) durch ein weiteres quer zur Strömungsrichtung des Fluids angeordnetes Festbett (2b) der Einströmraum (5a) an einem Ende begrenzt ist,
c) die Festbetten (2 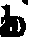 ) an eine Brennkammer (28) angrenzen, so daß die Einströmräume (5a) miteinander verbunden sind.

19. Verfahren zur Strömungsführung in Radialstromreaktoren zur Kontaktierung von fluiden Phasen mit Feststoffen in einer der Vorrichtungen nach einem der Ansprüche 1 bis 18,
**dadurch gekennzeichnet**, daß in die Einströmräume (5) zwischen den Reaktorfestbetten mindestens zwei getrennte Teilströme der fluiden Phasen gegeben werden, von denen mindestens ein Teilstrom die Festbetten entweder radial nach innen oder radial nach außen durchströmt.

20. Verfahren zur Strömungsführung in Radialstromreaktoren zur Kontaktierung einer fluiden Phase mit Feststoff, in einer der Vorrichtungen nach den Ansprüchen 1 bis 17,
**dadurch gekennzeichnet**, daß der Gesamtstrom der fluiden Phase bei Eintritt in den Einströmraum des Festbettes in zwei Teilströme geteilt wird, die das Festbett entweder radial nach innen oder radial nach außen oder radial nach innen und radial nach außen durchströmen und daß die beiden Teilströme einzeln oder als Gesamtstrom abgeführt werden.

21. Verfahren nach Anspruch 20,
**dadurch gekennzeichnet**, daß jeder Teilstrom größer 0 bis 100 % des Gesamtstromes beträgt.

22. Verwendung der Vorrichtungen nach den Ansprüchen 1 bis 18 zur Gasreinigung, insbesondere zur Reinigung von Abluft.
